# EUROPÄISCHE PATENTSCHRIFT

(11) **EP 1 188 467 B1**
(45) Veröffentlichungstag und Bekanntmachung des Hinweises auf die Patenterteilung: **08.02.2006**
(21) Anmeldenummer: 01121811.2
(22) Anmeldetag: 11.09.2001
(51) Int. Cl.: B01D 27/06, B01D 29/07, B01D 39/00

(54) **Flüssigkeitsfilter**
Liquid filter
Filtre pour liquide

(30) Priorität: 13.09.2000 DE 10045217
(43) Veröffentlichungstag der Anmeldung: 20.03.2002
(73) Patentinhaber: ROBERT BOSCH GMBH, 70442 Stuttgart (DE)
(72) Erfinder: Kaehler, Juergen, 28663 Cobena (ES)

(56) Entgegenhaltungen:
- EP-A- 0 893 151
- DE-A- 2 039 482
- DE-U- 29 814 830
- US-A- 5 427 597

## Beschreibung

### Stand der Technik

Die Erfindung geht aus von einem Flüssigkeitsfilter nach der im Oberbegriff des Anspruchs 1 näher angegebenen Gattung.

Aus der DE 20 39 482 C3 ist ein derartiges Flüssigkeitsfilter in axial durchströmter Wickelbauart bekannt, wie es zum Reinigen von Kraftstoffen, insbesondere von Dieselkraftstoff eingesetzt wird. Dieses Flüssigkeitsfilter weist ein Wickelelement auf, bei dem ein über seine ganze Länge einen V-förmigen Querschnitt aufweisender Filtermaterialstreifen spiralig um ein Mittelrohr aufgewickelt wird. Solche Flüssigkeitsfilter zeichnen sich durch gute Filtriereigenschaften bei geringem Materialaufwand bei kompakter Bauform aus. Im Zusammenhang mit Einspritzsystem für Verbrennungskraftmaschinen werden immer höhere Anforderungen an den Abscheidegrad und die Standzeit solcher Flüssigkeitsfilter gestellt. Vorzugsweise soll dabei die Standzeit eines Flüssigkeitsfilters an die Lebensdauer eines Kraftfahrzeuges angenähert werden. Dies ist mit dem hier verwendeten Filterpapierstreifen aus einschichtigem, gekrepptem Filterpapier kaum erreichbar.

Ferner ist aus der EP 0 893 151 A2 ein Filtermaterial bekannt, das sich besonders für einen hohen Abscheidegrad und für eine hohe Standzeit eignet. Dieses Filtermaterial ist mehrschichtig ausgeführt und besteht aus einer Papierschicht und aus einer damit zusammenlaminierten Faserschicht, die vorzugsweise aus Mikrofasern hergestellt wird. Diese Faserschicht wird im sogenannten Meltblown-Verfahren hergestellt, wobei synthetische polymere Fasern nach Art eines Vlieses an der Papierschicht angeordnet werden. Zum Schutz gegen mechanische Beanspruchungen ist das Meltblown-Vlies bei einer besonderen Ausführungsform zusätzlich auf seiner von der Papierschicht abgewandten Seite durch eine dritte Schicht abgedeckt, die als Spinnvliesstoff ausgebildet ist und höhere Festigkeitswerte aufweist. Mit solchen Filtermaterialien in laminierter Verbundtechnik lassen sich Abscheidegrad und Standzeiten bei einem Filter wesentlich erhöhen; jedoch ist dieses mehrschichtige Filtermaterial relativ teuer und in der Fertigung schwieriger zu handhaben. Vor allem handelt es sich hier um einen relativ einfach aufgebauten Staubfilterbeutel, wie sie in der Regel bei Staubsaugern Verwendung finden.

Ferner ist es aus der US 5 427 597 bekannt, solche mehrschichtigen Filtermedien mit einer tragenden Papierschicht und Meltblown-Faserschicht zu einem Filtereinsatz zu verarbeiten, der jedoch hier als radial durchströmter Sternfilter ausgebildet ist und zum Reinigen von Gasen dient.

### Vorteile der Erfindung

Das erfindungsgemäße Flüssigkeitsfilter mit den kennzeichnenden Merkmalen des Anspruchs 1 hat demgegenüber den Vorteil, daß sich auf diese Weise die Vorteile solcher Meltblown-Faserschichten mit denjenigen eines Wickelfilters kombinieren lassen. Obwohl das Flüssigkeitsfilter mit dem axial durchströmten Wickelfilterelement teurer baut und schwerer herstellbar ist, läßt sich dadurch eine ganz wesentlich gesteigerte Verlängerung der Standzeit sowie gleichzeitig ein erheblich verbesserter Reinigungsgrad erreichen. Die kompakte Bauweise und der relativ geringe Materialaufwand für das Wickelelement bleiben erhalten. Das Flüssigkeitsfilter kann ohne äußere Formänderungen in bisherigen Anlagen ohne weiteres eingesetzt werden.

Durch die in den Unteransprüchen aufgeführten Maßnahmen sind vorteilhafte Weiterbildungen und Verbesserungen des im Anspruch 1 angegebenen Flüssigkeitsfilters möglich. So können die Filtereigenschaften auf einfache und kostengünstige Weise verbessert werden, wenn gemäß Anspruch 2 die Meltblown-Faserschicht aus synthetischen polymeren Fasern hergestellt wird. Ferner ist es besonders vorteilhaft, wenn gemäß Anspruch 3 die Meltblown-Faserschicht in dem Raum des Wickels angeordnet wird, welcher der Schmutzseite zugeordnet ist; dies wirkt sich nicht nur günstig auf eine wirksame Filtrierung und auf eine Erhöhung der Standzeit aus, sondern ermöglicht auch eine sichere Abdichtung, da auf diese Weise die Kleberraupe zwischen zwei Papierlagen zu liegen kommt und damit eine feste und dichte Verbindung herstellen kann. Weitere vorteilhafte Ausgestaltungen ergeben sich aus den übrigen Ansprüchen, der Beschreibung sowie der Zeichnung.

### Zeichnung

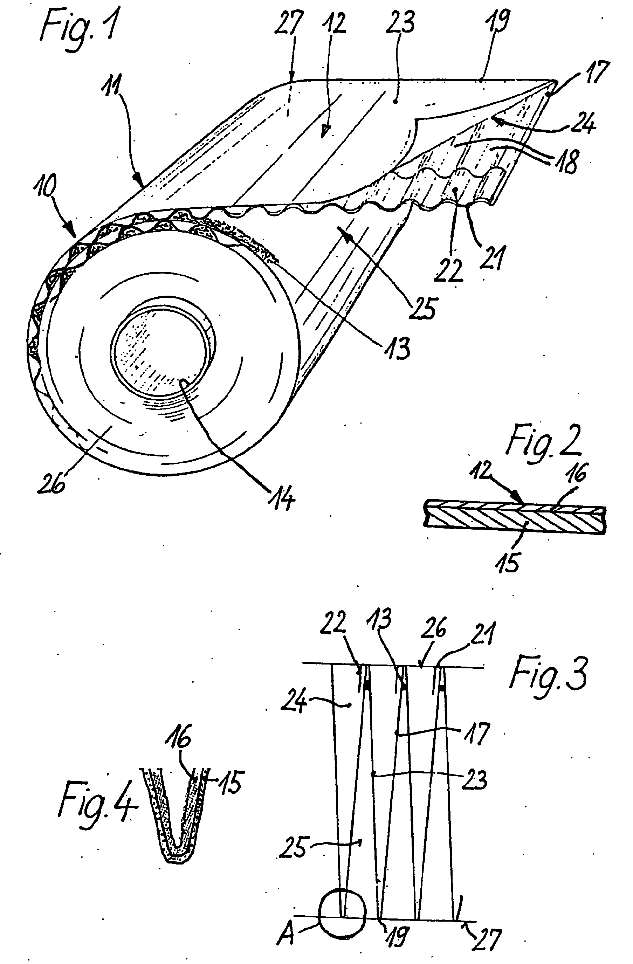

Ein Ausführungsbeispiel der Erfindung ist in der Zeichnung dargestellt und in der nachfolgenden Beschreibung näher erläutert. Es zeigen Figur 1 in perspektivischer Darstellung den Wickelaufbau eines Flüssigkeitsfilters in vereinfachter Darstellung, Figur 2 einen Längsschnitt durch einen Teil eines Filtermaterialstreifens in vergrößertem Maßstab, Figur 3 in stark vereinfachter Darstellung die Anordnung des Filtermaterialstreifens im Wickel nach Figur 1, und Figur 4 als Einzelheit nach A in Figur 3 den Filtermaterialstreifen in vergrößertem Maßstab.

### Beschreibung des Ausführungsbeispiels

Die Figur 1 zeigt als Teil eines Flüssigkeitsfilters 10 in perspektivischer Darstellung den Aufbau eines Wickels 11, der im wesentlichen aus einem V-förmig gefalteten Filtermaterialstreifen 12 und einem Thermoplastkleber 13 zur dichten und festen Verbindung benachbarter Lagen des Filtermaterialstreifens 12 besteht, der um ein Mittelrohr 14 spiralig aufgewickelt ist.

Wie die Figur 2 näher zeigt, besteht der Filtermaterialstreifen 12 aus einem zweischichtigen Material, bei dem über seine gesamte Ausdehnung eine Papierschicht 15 und eine Meltblown-Faserschicht 16 zusammenlaminiert sind. Dabei besteht die Meltblown-Faserschicht 16 aus synthetischen polymeren Mikrofasern, die nach dem an sich bekannten Meltblown-Verfahren hergestellt wird, wobei die Fasern vorzugsweise aus Polyamid oder Polyester bestehen können. Diese Meltblown-Faserschicht 16 kann in verschiedener Weise hergestellt und auf die Papierschicht 15 aufgebracht werden. So läßt sich die Meltblown-Faserschicht 16 als Vlies ausbilden, das eigenfest ist und auf die Papierschicht 15 aufgebracht wird, so daß der Filtermaterialstreifen 12 über seine gesamte Fläche zweischichtig aufgebaut ist. Diese Mikrofasern können aber auch unmittelbar im Meltblown-Verfahren auf die Papierschicht 15 aufgebracht werden, so daß die Mikrofasern unmittelbar mit dem Papier verbunden werden. Eine solche Verbindung läßt sich auch in anderer Weise herstellen, indem die.beiden Schichten aus Papier und Faserschicht miteinander verklebt, oder durch Heißsiegeln oder Ultraschall miteinander verbunden werden. Bei diesem zweischichtigen Filtermaterialstreifen 12 übernimmt die Papierschicht 15, die vorzugsweise aus einem für Filterzwecke geeigneten Krepp-Papier besteht, neben ihrer Filterfunktion auch eine stützende Funktion infolge ihrer größeren Festigkeit relativ zu der weichen Meltblown-Faserschicht. Während das Filterpapier 15 vor allem für die Güte des Abscheidegrades verantwortlich ist, ergibt die Meltblown-Faserschicht 16 eine ganz erhebliche Vergrößerung der Standzeit, wobei diese sogar mehr als verdoppelt werden kann; zudem erhöht die Meltblown-Faserschicht auch den Abscheidegrad erheblich, wobei eine Zunahme von 5 bis 10% durchaus möglich ist.

Wie die perspektivische Darstellung des Wickelaufbaus in Figur 1 näher zeigt, weist der Filtermaterialstreifen 12 an einem einen Schenkel des V-förmigen Querschnitts bildenden Teil 17 rillenartige Vertiefungen 18 auf. Diese Vertiefungen 18 verlaufen über die ganze Schenkelbreite und sind in gleichmäßigen Abständen voneinander und senkrecht zu einer Faltkante 19 angeordnet. Der Teil 17 weist an dem der Faltkante 19 gegenüberliegenden Rand 21 einen umgelegten Saum 22 auf, der zwischen dem Teil 17 und dem den anderen Schenkel des V-förmigen Querschnitts bildenden Teil 23 des Filtermaterialstreifens liegt. Der Saum 22 ist zusammen mit dem Teil 17 gerillt und versteift den Rand 21, wodurch die Vertiefungen 18 formstabil sind. Der Teil 23 weist keine rillenartige Vertiefungen wie im Teil 17 auf, sondern ist im wesentlichen glatt ausgebildet.

Wie die Figur 1 in Verbindung mit Figur 3 näher zeigt, in der nach Art eines teilweisen Längsschnitts durch den Wickel 11 die schematische Anordnung des Filtermaterialstreifens 12 aufgezeigt ist, ist zwischen dem gerillten Teil 17 einer Lage und dem glatten Teil 23 der benachbarten Lage des spiralig aufgewickelten Filtermaterialstreifens 12 ein Streifen eines Thermoplastklebers 13 in der Nähe des Randes 21 angeordnet. Auf diese Weise sind im Wickel 11 zwei ineinandergefügte, spiralige Räume 24 und 25 ausgebildet, die von den Stirnseiten 26 beziehungsweise 27 aus zugänglich und voneinander getrennt sind. Der Raum 24 ist durch die Anordnung des Saumes 22 zwischen den Schenkeln größer gehalten als der Raum 25, so daß für eine Schmutzablagerung genügend Raum zur Verfügung steht und die Gefahr einer Verstopfung verringert wird.

Wie die Figur 3 in Verbindung mit der Einzelheit nach Figur 4 näher zeigt, ist der zweischichtige Filtermaterialstreifen 12 im Wickel 11 so angeordnet, daß die stützende Papierschicht 15 der zweiten Stirnseite 27 und damit der Reinseite zugewandt ist, während die Meltblown-Faserschicht 16 in dem Raum 24 liegt, der zur ersten Stirnseite 26 hin offen ist und damit der Schmutzseite zugeordnet ist. Der Wickel 11 wird in an sich bekannter Weise in ein übliches Gehäuse so eingesetzt und abgedichtet, daß die erste Stirnseite 26 einem Zulauf auf der Schmutzseite und die zweite Stirnseite 27 zu einem Ablauf auf der Reinseite Verbindung hat.

Zur Herstellung des Wickels 11 wird der zweischichtige Filtermaterialstreifen 12 an einem Rand umgelegt und dadurch der Saum 22 gebildet. Dabei ist darauf zu achten, daß beim Umlegen des Saumes 22 dieser auf die Meltblown-Faserschicht 16 zu liegen kommt. Anschließend wird der den Saum 22 tragende Teil 17 bis zur Längsmitte des Filtermaterialstreifens 12 hin mit den rillenartigen Vertiefungen 18 versehen, wobei dies zweckmäßigerweise durch Fördern dieses Teils durch ein mit Spiel ineinander kämmendes Stirnräderpaar geschehen kann. Der auf diese Weise vorbereitete Filtermaterialstreifen 12 wird schließlich durch Falten um die Faltkante 19 zu einem Filtermaterialstreifen 12 mit V-förmigem Querschnitt geformt und unter Beigabe des Thermoplastklebers 13 zwischen benachbarte Lagen des Filtermaterialstreifens auf dem Mittelrohr 14 spiralig aufgerollt. Der Thermoplastkleber 13 wird durch eine Düse in zähflüssigem Zustand auf den glatten Teil 23 in Randnähe aufgetragen und während dem Wickelvorgang in die Vertiefungen 18 gepreßt, wo er während des Erkaltens erstarrt. Der Thermoplastkleber ermöglicht dadurch eine dichte und feste Verbindung zweier benachbarter Lagen des Filtermaterialstreifens 12, auch bei größeren Abständen, schrumpft nicht beim Erkalten und ist widerstandsfähig, vor allem gegen Kraftstoffe. Vorteilhaft ist dabei, daß der Thermoplastkleber 13 nur zwischen zwei Papierschichten 15 zweier benachbarter Lagen zu liegen kommt, da eine dichte Verbindung vorzugsweise nur mit Papier herstellbar ist. Anfang und Ende des Filtermaterialstreifens 12 werden durch eine zusätzliche Naht aus Thermoplastkleber parallel zu den Vertiefungen 18 abgedichtet sowie am Mittelrohr 14 beziehungsweise am Wickel 11 in an sich bekannter Weise befestigt. Die Verklebung der ersten Papierlage in dem zweischichtigen Filtermaterialstreifen 12 gegenüber dem Mittelrohr 14 aus Pappe geschieht dadurch, daß eine verstärkte Kleberraupe aus Thermoplast während des Wickelvorgangs genau über den Rand der ersten Papierlage gelegt wird, wodurch bei Überdeckung durch die zweite Lage ein Teil des Klebers die Rillen zwischen dem Filtermaterialstreifen ausfüllt, der Rest stirnseitig austritt und in noch heißem, teigigem Zustand mittels Spezialwerkzeug axial in den Wickel gedrängt und gesiegelt wird. Beim spiraligen Aufwickeln des V-förmigen Filtermaterialstreifens 12 bewirkt die Lage des Saumes 22 zwischen den Schenkeln, daß der Saum 22 weniger zusammengedrückt wird als der Teil 17 mit den Vertiefungen 18 und sich somit einwandfrei an den Teil 17 anlegt. Die Funktionen der Vertiefungen 18 als Längenausgleich, Abstandshalter und.Versteifungen sind unabhängig von der gezeigten regelmäßigen Form der Vertiefungen 18.

Durch die Verwendung eines derartigen Flüssigkeitsfilters 10, bei dem zur Herstellung des Wickels 11 ein mehrschichtiger Filtermaterialstreifen 12 verwendet wird, läßt sich neben einem sehr guten Abscheidegrad eine besonders hohe Standzeit erreichen. Dabei sorgt die im Vergleich zur Meltblown-Faserschicht 16 erheblich stabilere und eine größere Festigkeit aufweisende Papierschicht 15 nicht nur für einen guten Abscheidegrad des Filters, sondern erlaubt vor allem die Bearbeitung und Faltung des Filtermaterialstreifens 12, sorgt für eine ausreichende Stabilität des Wickels 11 und ermöglicht eine einwandfreie Abdichtung durch den Thermoplastkleber zwischen Papierschichten. Die Meltblown-Faserschicht 16 trägt demgegenüber vor allem zur Erhöhung der Standzeit bei.

Selbstverständlich sind an der gezeigten Ausführungsform Änderungen möglich, ohne vom Gedanken der Erfindung abzuweichen. So kann anstelle des Krepp-Papiers im zweischichtigen Filtermaterialstreifen 12 auch ein glattes Filterpapier als Ausgangsmaterial verwendet werden. Auch die Form und die Größe der Vertiefungen 18 läßt sich in weiten Bereichen verändern. Auch ist es möglich, anstelle der gezeigten Ausführungsform die rillenartigen Vertiefungen 18 an dem außenliegenden Teil des Filtermaterialstreifens anzuordnen. Auch die Ausbildung und die Wahl von Materialien für die Meltblown-Faserschicht 16 läßt sich in weiten Grenzen variieren. Obwohl der Saum 22 besonders vorteilhaft ist, kann auch ein Wickel ohne diesen Saum hergestellt werden. Auch wäre es möglich, bei der Herstellung des Filtermaterialstreifens 12 so zu verfahren, daß zuerst an einer Papierschicht 15 der Saum 22 umgelegt wird und erst danach auf der Papierschicht eine Meltblown-Faserschicht aufgebracht wird, wobei der Bereich des Saumes 22 von der Meltblown-Faserschicht ausgespart bleibt. Ferner wäre es möglich, anstelle des in Figur 2 dargestellten zweischichtigen Filtermaterialstreifens 12 einen dreischichtigen Filtermaterialstreifen zu verwenden, bei dem die gegen mechanische Beanspruchungen empfindliche Meltblown-Faserschicht durch eine dritte Schicht abgedeckt wird, die dann vorzugsweise aus einem strapazierfähigen Kunststoff-Faservlies bestehen könnte oder aus einem anderen dafür geeigneten Material. Auch läßt sich beim Herstellen des Wickelelements ein Filtermaterialstreifen verwenden, bei dem beide Schenkel der V-Bahn mit rillenartigen Vertiefungen 18 versehen sind.

## Patentansprüche

1. Flüssigkeitsfilter mit einem spiralig gewickelten, über seine ganze Länge einen V-förmigen Querschnitt aufweisenden Filtermaterialstreifen, bei dem die Ränder benachbarter Lagen an der offenen Seite des Filtermaterialstreifens dichtend miteinander verbunden sind, so daß zwei spiralförmig ineinandergefügte, von entgegengesetzten Seiten zugängliche Räumen im Wickel entstehen und bei dem der Filtermaterialstreifen quer zur Längsrichtung verlaufende, rillenartige Vertiefungen aufweist, welche den Längenausgleich beim spiraligen Aufwickeln übernehmen, **dadurch gekennzeichnet, daß** der Filtermaterialstreifen (12) aus wenigstens zwei Schichten (15, 16) aufgebaut ist, wobei eine Papierschicht (15) und eine Meltblown-Faserschicht (16) zusammen laminiert sind.

2. Flüssigkeitsfilter nach Anspruch 1, **dadurch gekennzeichnet, daß** die Meltblown-Faserschicht (16) aus synthetischen, polymeren Fasern besteht.

3. Flüssigkeitsfilter nach Anspruch 1 oder 2, **dadurch gekennzeichnet, daß** die Meltblown-Faserschicht (16) in dem Raum (24) des Wickels (11) angeordnet ist, der der offenen Seite (26) des Filtermaterialstreifens (12) zugeordnet ist.

4. Flüssigkeitsfilter nach einem der Ansprüche 1 bis 3, **dadurch gekennzeichnet, daß** der die Ränder benachbarter Lagen abdichtende Kleberwulst (13) zwischen zwei Papierschichten (15) angeordnet ist.

5. Flüssigkeitsfilter nach einem der Ansprüche 1 bis 4, **dadurch gekennzeichnet, daß** die Meltblown-Faserschicht (16) als Vliesstoff ausgebildet ist, der zumindest eigenfest ist.

6. Flüssigkeitsfilter nach einem der Ansprüche 2 bis 5, **dadurch gekennzeichnet, daß** die Meltblown-Faserschicht (16) aus Polyamid oder Polyester besteht.

7. Flüssigkeitsfilter nach einem der Ansprüche 1 bis 5, **dadurch gekennzeichnet, daß** die rillenartigen Vertiefungen (18) des Filtermaterialstreifens (12) nur an.einem Teil (17) angeordnet sind, der einen Schenkel des V-förmigen Querschnitts bildet, während der den anderen Schenkel bildende Teil (23) des Filtermaterialstreifens (12) im wesentliche keine derartigen Vertiefungen aufweist.

8. Flüssigkeitsfilter nach Anspruch 7, **dadurch gekennzeichnet, daß** der Teil (17) des Filtermaterialstreifens (12) mit den Vertiefungen (18) an seinem der offenen Seite (26) zugewandten Rand (21) einen umgelegten Saum (22) aufweist, der insbesondere zwischen beiden Schenkeln der V-Bahn liegt.

9. Flüssigkeitsfilter nach einem der Ansprüche 1 bis 8, **dadurch gekennzeichnet, daß** die Papierschicht (15) aus gekrepptem Papier besteht.

10. Flüssigkeitsfilter nach einem der Ansprüche 1 bis 9, **dadurch gekennzeichnet, daß** der Filtermaterialstreifen (12) spiralig so um ein Mittelrohr (14) gewickelt ist, daß der die Vertiefungen (18) aufweisende Teil (17) des Filterpapierstreifens (12) dem Mittelrohr (14) zugewandt ist.

11. Flüssigkeitsfilter nach einem oder mehreren der Ansprüche 1 bis 10, **dadurch gekennzeichnet, daß** er als Filter zum Reinigen von Dieselkraftstoff verwendet wird.

## Revendications

1. Filtre à liquide avec une bande de matériau filtrant enroulée en spirale présentant une section transversale en forme de V sur toute sa longueur, dans lequel les bords de couches voisines sont reliés les uns aux autres de façon étanche au niveau de la face ouverte de la bande de matériau filtrant pour ainsi obtenir dans l'enroulement deux espaces en forme de spirale engagés l'un dans l'autre et accessibles par les côtés opposés, et dans lequel la bande de matériau filtrant présente des creux en forme de rainures s'étendant transversalement à la direction longitudinale et assurant la compensation de longueur lors de l'enroulement en spirale,
**caractérisé en ce que**
la bande de matériau filtrant (12) est composée d'au moins deux couches (15, 16), une couche de papier (15) et une couche de fibres fondues par soufflage (16) laminées l'une avec l'autre.

2. Filtre à liquide selon la revendication 1,
**caractérisé en ce que**
la couche de fibres fondues par soufflage (16) est en fibres polymères synthétiques.

3. Filtre à liquide selon la revendication 1 ou 2,
**caractérisé en ce que**
la couche de fibres fondues par soufflage (16) est disposée dans l'espace (24) de l'enroulement (11) qui est associé à la face ouverte (26) de la bande de matériau filtrant (12).

4. Filtre à liquide selon l'une quelconque des revendications 1 à 3,
**caractérisé en ce qu'**
un boudin de colle (13) rendant les bords de couches voisines étanches est disposé entre deux couches de papier (15).

5. Filtre à liquide selon l'une quelconque des revendications 1 à 4,
**caractérisé en ce que**
la couche de fibres fondues par soufflage (16) est un non-tissé qui présente au moins une stabilité inhérente.

6. Filtre à liquide selon l'une quelconque des revendications 2 à 5,
**caractérisé en ce que**
la couche de fibres fondues par soufflage (16) est en polyamide ou en polyester.

7. Filtre à liquide selon l'une quelconque des revendications 1 à 5,
**caractérisé en ce que**
les creux en forme de rainures (18) de la bande de matériau filtrant (12) ne sont disposés que sur une partie (17) qui forme une branche de la section transversale en forme de V, tandis que la partie (23) de la bande de matériau filtrant (12) formant l'autre branche ne présente pratiquement pas de tels creux.

8. Filtre à liquide selon la revendication 7,
**caractérisé en ce que**
la partie (17) de la bande de matériau filtrant (12) présentant les creux (18) présente au niveau de son bord (21) tourné vers la face ouverte (26) un ourlet replié (22) situé notamment entre les deux branches du V.

9. Filtre à liquide selon l'une quelconque des revendications 1 à 8,
**caractérisé en ce que**
la couche en papier (15) est constituée de papier crêpé.

10. Filtre à liquide selon l'une quelconque des revendications 1 à 9,
**caractérisé en ce que**
la bande de matériau filtrant (12) est enroulée en spirale autour d'un tube central (14) de telle sorte que la partie (17) de la bande de matériau filtrant (12) présentant les creux (18) se situe en regard du tube central (14).

11. Filtre à liquide selon l'une ou plusieurs des revendications 1 à 10,
**caractérisé en ce qu'**
il est utilisé comme filtre pour nettoyer du carburant diesel.

## Claims

1. Liquid filter with a spirally wound filter material strip having a V-shaped cross section over its entire length, in the case of which the edges of adjacent layers are joined to each other in a sealing manner on the open side of the filter material strip, so that two chambers inserted spirally one in the other and accessible from opposite sides are produced in the wound roll and in the case of which the filter material strip has groove-like depressions that run transversely in relation to the longitudinal direction and undertake the linear compensation during the spiral winding, **characterized in that** the filter material strip (12) is made up of at least two layers (15, 16), a paper layer (15) and a meltblown fibre layer (16) being laminated together.

2. Liquid filter according to Claim 1, **characterized in that** the meltblown fibre layer (16) consists of synthetic, polymeric fibres.

3. Liquid filter according to Claim 1 or 2, **characterized in that** the meltblown fibre layer (16) is arranged in the chamber (24) of the wound roll (11) that is assigned to the open side (26) of the filter material strip (12).

4. Liquid filter according to one of Claims 1 to 3, **characterized in that** the adhesive bead (13) sealing the edges of adjacent layers is arranged between two paper layers (15).

5. Liquid filter according to one of Claims 1 to 4, **characterized in that** the meltblown fibre layer (16) is formed from nonwoven material which is at least inherently strong.

6. Liquid filter according to one of Claims 2 to 5, **characterized in that** the meltblown fibre layer (16) consists of polyamide or polyester.

7. Liquid filter according to one of Claims 1 to 5, **characterized in that** the groove-like depressions (18) of the filter material strip (12) are arranged only on one part (17), which forms one leg of the V-shaped cross section, while the part (23) of the filter material strip (12) forming the other leg has essentially no such depressions.

8. Liquid filter according to Claim 7, **characterized in that** the part (17) of the filter material strip (12) with the depressions (18) has on its edge (21) facing the open side (26) a folded-back seam (22), which lies in particular between both legs of the V-channel.

9. Liquid filter according to one of Claims 1 to 8, **characterized in that** the paper layer (15) consists of crêpe paper.

10. Liquid filter according to one of Claims 1 to 9, **characterized in that** the filter material strip (12) is wound spirally around a central tube (14) in such a way that the part (17) of the filter paper strip (12) having the depressions (18) is facing the central tube (14).

11. Liquid filter according to one or more of Claims 1 to 10, **characterized in that** it is used as a filter for cleaning diesel fuel.
